# FASCICULE DE BREVET EUROPEEN

(11) **EP 0 709 018 B1**
(45) Date de publication et mention de la délivrance du brevet: **04.04.2001**
(21) Numéro de dépôt: 95440069.3
(22) Date de dépôt: 26.10.1995
(51) Int. Cl.: A01D 34/66, A01D 75/20

(54) **Machine agricole destinée à la coupe de végétaux avec dispositif de protection perfectionné**
Landmaschine zum Schneiden von Erntegut mit einer verbesserten Schutzvorrichtung
Agricultural machine used for cutting vegetables with an improved protection device

(30) Priorité: 28.10.1994 FR 9413106
(43) Date de publication de la demande: 01.05.1996
(73) Titulaire: KUHN S.A., 67700 Saverne (FR)
(72) Inventeur: Kieffer, Fernand, F-67700 Saverne (FR); Neuerburg, Horst, F-67700 Saverne (FR); Haberkorn, Jean-Paul, F-67700 Monswiller (FR)

(56) Documents cités:
- EP-A- 0 083 460
- EP-A- 0 402 957
- EP-A- 0 507 408
- EP-A- 0 514 314
- EP-A- 0 558 431
- DE-A- 1 582 356
- DE-A- 2 722 883
- US-A- 3 783 533
- US-A- 5 203 150

## Description

La présente invention se rapporte à une machine agricole destinée à la coupe de végétaux. Une telle machine agricole peut comporter :
- une structure d'attelage destinée à être liée à un véhicule moteur,
- un mécanisme de coupe lié directement ou indirectement à la structure d'attelage au moyen d'une articulation de sorte que ledit mécanisme de coupe puisse être amené dans une position de travail dans laquelle il s'étend transversalement à la direction de déplacement, ou dans une autre position, ledit mécanisme de coupe comportant des organes de coupe et un dispositif de protection enveloppant ceux-ci et dont une partie peut être déplacée dans une position non opérationnelle, et
- des organes d'entraînement capables d'entraîner lesdits organes de coupe lorsque ledit mécanisme de coupe se trouve dans sa position de travail et incapables d'assurer l'entraînement desdits organes de coupe lorsque ledit mécanisme de coupe se trouve dans l'autre position.

Le document **EP-A-0514314** décrit un faucheuse comportant un mécanisme de coupe muni d'organes de coupe destinés à couper des végétaux. Les organes de coupe sont constitués de disques tournant à haut régime dans un plan sensiblement horizontal et munis de couteaux articulés.

Cette faucheuse connue est destinée à être attelée au dispositif arrière de levage à trois points d'un tracteur agricole. Elle comporte à cet effet une structure d'attelage adéquate.

Son mécanisme de coupe est lié à ladite structure d'attelage au moyen d'une poutre porteuse s'étendant, durant le travail, au moins sensiblement orthogonalement à la direction de déplacement. Cette poutre porteuse est liée d'une part à la structure d'attelage au moyen d'une articulation d'axe au moins sensiblement vertical et d'autre part au mécanisme de coupe au moyen d'une articulation d'axe dirigé au moins sensiblement suivant la direction de déplacement lorsque ledit mécanisme de coupe se trouve dans la position de travail.

En vue de dessus, cette dernière articulation s'étend en sus au moins sensiblement dans la partie médiane du mécanisme de coupe et permet ainsi à ce dernier de suivre le relief du sol pendant le travail.

La première articulation, quant à elle, permet de positionner le mécanisme de coupe dans la position de travail dans laquelle il s'étend transversalement à la direction de déplacement, ou dans la position de transport dans laquelle il s'étend au moins sensiblement parallèlement à la direction de déplacement.

La faucheuse connue comporte également des organes d'entraînement assurant l'animation des organes de coupe. Ces organes d'entraînement comportent un carter de renvoi lié à la structure d'attelage, un premier arbre de transmission à joints universels transmettant le mouvement de la prise de force du tracteur agricole audit carter de renvoi et un second arbre de transmission transmettant le mouvement du carter de renvoi au carter d'entrée du mécanisme de coupe. Ces organes d'entraînement sont parfaitement capables d'entraîner les organes de coupe lorsque le mécanisme de coupe se trouve dans la position de travail. Ils sont cependant incapables d'assurer l'entraînement desdits organes de coupe lorsque le mécanisme de coupe se trouve en position de transport, car les angles des joints universels du second arbre de transmission sont alors trop importants.

Le mécanisme de coupe de la faucheuse connue comporte encore un dispositif de protection enveloppant les organes de coupe. Ce dispositif de protection doit éviter des accidents corporels en empêchant d'une part la projection, par les organes de coupe, d'objets tels que des pierres par exemple et d'autre part en interdisant l'accès inopiné auxdits organes de coupe.

Par le document **EP-A-0558431** on connaît également une machine agricole réalisée sous forme de faucheuse-conditionneuse, c'est-à-dire du type comportant, en sus du mécanisme de coupe, un mécanisme de conditionnement muni d'organes de conditionnement destinés à faire subir un traitement aux végétaux coupés dans le but d'accélérer leur dessication.

Cette faucheuse-conditionneuse connue est également destinée à être attelée au dispositif arrière de levage à trois points d'un tracteur agricole. Elle comporte à cet effet une structure d'attelage adéquate.

Son mécanisme de coupe et de conditionnement est également lié à ladite structure d'attelage au moyen d'une poutre porteuse s'étendant, durant le travail, au moins sensiblement orthogonalement à la direction de déplacement. Cette poutre porteuse est liée d'une part à la structure d'attelage au moyen d'une articulation d'axe au moins sensiblement vertical et d'autre part au mécanisme de coupe et de conditionnement au moyen d'une articulation d'axe dirigé au moins sensiblement suivant la direction de déplacement lorsque ledit mécanisme de coupe et de conditionnement se trouve dans la position de travail.

En vue de dessus, cette dernière articulation s'étend à une extrémité du mécanisme de coupe et de conditionnement. Cette deuxième articulation permet à ce dernier d'une part de suivre le relief du sol pendant le travail et d'autre part d'être pivoté vers le haut lors du transport.

Pour sa part, la première articulation permet de positionner le mécanisme de coupe et de conditionnement dans la position de travail dans laquelle il s'étend transversalement à la direction de déplacement, ou dans la position de transport dans laquelle il est sensiblement pivoté vers l'arrière.

La faucheuse-conditionneuse connue comporte également des organes d'entraînement assurant l'animation des organes de coupe et des organes de conditionnement du mécanisme de coupe et de conditionnement. Ces organes d'entraînement comportent un carter de renvoi lié à la poutre porteuse, un premier arbre de transmission à joints universels transmettant le mouvement de la prise de force du tracteur agricole audit carter de renvoi, un second arbre de transmission transmettant le mouvement du carter de renvoi au mécanisme de conditionnement et un jeu de courroies transmettant le mouvement du carter de renvoi au carter d'entrée du mécanisme de coupe. Ces organes d'entraînement sont parfaitement capables d'entraîner les organes de coupe et les organes de conditionnement lorsque le mécanisme de coupe et de conditionnement se trouve dans la position de travail. Ils sont cependant incapables d'assurer l'entraînement desdits organes de coupe et desdits organes de conditionnement lorsque le mécanisme de coupe et de conditionnement se trouve en position de transport, car les angles des joints universels des deux arbres de transmission sont alors trop importants.

Le mécanisme de coupe et de conditionnement de la faucheuse-conditionneuse connue comporte encore un dispositif de protection enveloppant les organes de coupe. Ce dispositif de protection doit éviter des accidents corporels en empêchant d'une part la projection, par les organes de coupe, d'objets tels que des pierres par exemple et d'autre part en interdisant l'accès inopiné auxdits organes de coupe.

Toutefois, lors des travaux de maintenance (remplacement des couteaux et/ou des disques usés ou détériorés notamment), il est nécessaire de pouvoir accéder facilement auxdits organes de coupe. A cet effet, le dispositif de protection de la faucheuse-conditionneuse connue comporte à l'avant un volet pouvant être pivoté aussi bien lorsque le mécanisme de coupe et de conditionnement se trouve dans la position de transport que lorsqu'il se trouve dans la position de travail.

Si ce volet relevable facilite grandement le travail de remplacement des disques ou des couteaux usés ou détériorés, il constitue cependant un danger.

En effet, lorsqu'on change les disques et les couteaux alors que le mécanisme de coupe et de conditionnement se trouve en position de travail, les organes de coupe pourraient être mis accidentellement en mouvement étant donné que dans cette position les organes d'entraînement sont parfaitement capables de transmettre le mouvement. L'opérateur qui est en train de procéder au remplacement des disques ou des couteaux, pourrait alors subir des blessures extrêmement graves, voire mortelles.

Mais ce volet pourrait également être relevé inopinément ou involontairement alors que les organes de coupe tournent. On peut, là aussi, s'imaginer les blessures qui peuvent être occasionnées.

L'objectif de la présente invention est de remédier à ce problème.

A cet effet, la machine agricole destinée à la coupe de végétaux selon la présente invention est caractérisée en ce qu'elle comporte en sus une butée qui empêche le déplacement de ladite partie du dispositif de protection dans la position non opérationnelle lorsque le mécanisme de coupe se trouve en position de travail, et qui autorise au contraire ledit déplacement lorsque ledit mécanisme de coupe se trouve dans l'autre position, la mise en place de ladite butée se faisant automatiquement au moyen d'un organe d'actionnement lorsque ledit mécanisme de coupe est amené de ladite autre position dans la position de travail.

Dans la machine agricole destinée à la coupe de végétaux selon la présente invention, il est donc également prévu qu'une partie du dispositif de protection qui enveloppe les organes de coupe, puisse être déplacée afin de pouvoir accéder facilement auxdits organes de coupe en vue de leur contrôle et/ou de leur remplacement.

Toutefois, le déplacement de ladite partie du dispositif de protection n'est possible que lorsque le mécanisme de coupe se trouve dans une position autre que la position de travail et dans laquelle les organes d'entraînement des organes de coupe sont incapables d'animer ces derniers. Il n'y a donc plus aucun risque que lesdits organes de coupe soient mis accidentellement en mouvement lors du remplacement des organes de coupe usés ou détériorés.

Lorsque le mécanisme de coupe se trouve en position de travail, la butée empêche le déplacement inopiné ou involontaire de ladite partie du dispositif de protection.

Dans la machine agricole destinée à la coupe de végétaux selon la présente invention, il est du reste prévu que la mise en place de ladite butée se fasse automatiquement au moyen d'un organe d'actionnement lorsque le mécanisme de coupe est amené de ladite autre position dans la position de travail. La mise en place de la butée ne requiert donc aucune intervention spéciale de la part de l'utilisateur de la machine agricole, ce qui constitue également un facteur d'élimination de risque.

Il pourra en sus être avantageusement prévu que ledit organe d'actionnement commande également automatiquement l'escamotage de la butée lorsque le mécanisme de coupe est amené de la position de travail dans ladite autre position. Ceci facilitera l'utilisation de la machine agricole.

Il pourra en sus également être avantageusement prévu qu'un organe de maintien maintienne ladite partie du dispositif de protection dans sa position non opérationnelle, l'action de cet organe de maintien étant automatiquement neutralisée lorsque le mécanisme de coupe est déplacé de ladite autre position dans la position de travail. Ceci facilitera encore davantage l'utilisation de ladite machine agricole puisque ladite partie du dispositif de protection retournera automatiquement en position opérationnelle soit de manière forcée, soit sous l'effet de son poids propre. Dans une solution avantageuse, il pourra d'ailleurs être prévu que ledit organe de maintien collabore avec la butée lorsque le mécanisme de coupe se trouve dans ladite autre position. La remise de la butée dans sa position active libèrera ainsi automatiquement l'organe de maintien dont l'action sera alors neutralisée.

L'organe d'actionnement destiné à agir sur la butée pourra être avantageusement constitué d'une tringle articulée entre la structure d'attelage et la butée.

Cette butée pourra également être avantageusement liée directement ou indirectement au mécanisme de coupe et se déplacer conjointement avec ledit mécanisme de coupe lorsque celui-ci est déplacé entre la position de travail et l'autre position. Préférentiellement, cette liaison sera constituée d'une articulation (deuxième articulation) dont l'axe pourra être dirigé vers l'avant lorsque le mécanisme de coupe se trouve en position de travail.

Dans les réalisations où le mécanisme de coupe est lié à la structure d'attelage au moyen d'une poutre porteuse liée d'une part au mécanisme de coupe à l'aide d'une articulation d'axe dirigé vers l'avant lorsque le mécanisme de coupe se trouve en position de travail (troisième articulation), et d'autre part à la structure d'attelage à l'aide de la première articulation, l'axe de ladite deuxième articulation (liant la butée au mécanisme de coupe) et l'axe de cette troisième articulation pourront être avantageusement confondus. Dans une solution préférentielle, l'axe de ladite deuxième articulation et/ou l'axe de ladite troisième articulation seront dirigés au moins sensiblement suivant la direction de déplacement lorsque le mécanisme de coupe se trouve en position de travail.

La partie du dispositif de protection pouvant être déplacée, pourra avantageusement être un volet susceptible d'être pivoté autour d'un axe de pivotement. Préférentiellement, ce dernier s'étendra, en position de travail du mécanisme de coupe, au moins sensiblement horizontalement et transversalement à la direction de déplacement.

Dans le cas où la butée sera liée au mécanisme de coupe au moyen de la deuxième articulation, ledit axe de pivotement s'étendra également de préférence au moins sensiblement orthogonalement à l'axe de cette deuxième articulation.

Il pourra par ailleurs être avantageusement prévu que ladite partie du dispositif de protection capable d'être déplacée, soit située à l'avant dudit dispositif de protection lorsque le mécanisme de coupe se trouve en position de travail.

Selon une autre caractéristique de l'invention, il pourra également être prévu qu'une plaque de signalisation liée directement ou indirectement au mécanisme de coupe soit déplacée automatiquement au moyen d'un organe d'actionnement (second organe d'actionnement) dans une position opérationnelle (position de signalisation) lorsque le mécanisme de coupe est placé dans une position de transport, et dans une position non opérationnelle où elle ne gêne pas la coupe des végétaux, lorsque le mécanisme de coupe est déplacé en position de travail.

Il pourra de surcroît être avantageusement prévu qu'un moyen de couplage lie ce second organe d'actionnement au premier organe d'actionnement. L'action du premier organe d'actionnement sur la butée provoquera ainsi simultanément une action sur le second organe d'actionnement.

Comme dit précédemment, la butée pourra être liée directement ou indirectement au mécanisme de coupe.

Dans ce cas, ladite deuxième articulation pourra comporter un tourillon à une extrémité duquel est fixée la butée et à l'autre extrémité duquel est fixé un bras. Le second organe d'actionnement, quant à lui, pourra être constitué d'une tringle articulée entre ledit bras et un bras porteur de la plaque de signalisation. Ce tourillon muni de la butée et dudit bras constituera ainsi un tel moyen de couplage.

Il pourra par ailleurs être prévu que la longueur de ladite tringle soit réglable ce qui permettra de régler exactement la position opérationnelle de la plaque de signalisation.

La liaison (directe ou indirecte) de la plaque de signalisation au mécanisme de coupe pourra être avantageusement constituée d'une articulation (quatrième articulation). La plaque de signalisation pourra ainsi être déplacée dans la position opérationnelle et dans la position non opérationnelle par pivotement autour de l'axe de ladite quatrième articulation. L'axe de cette quatrième articulation pourra être dirigé vers l'avant lorsque le mécanisme de coupe se trouve dans la position de travail.

Dans le cas où la butée sera liée directement ou indirectement au mécanisme de coupe au moyen de la deuxième articulation, l'axe de ladite quatrième articulation sera de préférence au moins sensiblement parallèle à l'axe de cette deuxième articulation.

Dans les réalisations où l'axe de la première articulation est dirigé vers le haut et où l'autre position que peut occuper le mécanisme de coupe est une position de transport, la plaque de signalisation sera avantageusement prévue à l'extrémité extérieure du mécanisme de coupe éloignée de la structure d'attelage.

Dans les réalisations où le mécanisme de coupe est lié à la structure d'attelage au moyen d'une poutre porteuse liée d'une part au mécanisme de coupe à l'aide d'une troisième articulation d'axe dirigé vers l'avant lorsque le mécanisme de coupe se trouve en position de travail, et d'autre part à la structure d'attelage à l'aide de la première articulation, il pourra être prévu qu'un organe de limitation agissant entre ledit mécanisme de coupe et ladite poutre porteuse, limite le pivotement du mécanisme de coupe par rapport à la poutre porteuse autour de l'axe de ladite troisième articulation au cours du travail et verrouille ledit pivotement lors du transport. Le verrouillage, respectivement le déverrouillage dudit pivotement sera réalisé automatiquement au moyen d'un troisième organe d'actionnement lorsque le mécanisme de coupe est déplacé dans une position de transport, respectivement dans la position de travail.

Là aussi, il pourra être avantageusement prévu que le troisième organe d'actionnement soit lié à l'un des organes d'actionnement précédents, de préférence au premier organe d'actionnement, de telle sorte qu'une action sur ledit organe d'actionnement provoque simultanément une action sur le troisième organe d'actionnement.

Ledit organe de limitation pourra comporter un limiteur muni d'un trou allongé et un verrou lié à la poutre porteuse au moyen d'une articulation (cinquième articulation) laquelle est matérialisée par un tourillon traversant simultanément l'ouverture allongée dudit limiteur. L'axe de cette cinquième articulation sera de préférence au moins sensiblement parallèle à la direction de déplacement lorsque le mécanisme de coupe se trouve en position de travail.

Il pourra de surcroît être prévu que le troisième organe d'actionnement comporte deux organes élastiquement déformables dont l'un assure la mise en place dudit verrou tandis que l'autre assure la neutralisation de celui-ci.

D'autres caractéristiques et avantages de la présente invention ressortent de la description suivante d'un exemple de réalisation non limitatif faite en référence au dessin annexé sur lequel :
- la figure 1 représente une vue de dessus d'une machine agricole destinée à la coupe de végétaux selon l'invention réalisée sous forme de faucheuse ; celle-ci est en position de travail ;
- la figure 2 représente une vue arrière de la faucheuse en position de travail ;
- la figure 3 représente, à une échelle agrandie, une vue de devant de la liaison entre le mécanisme de coupe et la poutre porteuse de la faucheuse en position de travail ;
- la figure 4 représente, à une échelle agrandie, la zone IV de la figure 2 ;
- la figure 5 représente, à une échelle agrandie, la zone V de la figure 2 ;
- la figure 6 représente une coupe par le plan VI défini sur la figure 3 ;
- la figure 7 représente une vue de dessus de la faucheuse de la figure 1 placée en position de transport ;
- la figure 8 représente une vue arrière partielle de la faucheuse en position de transport ;
- la figure 9 représente, à une échelle agrandie, une vue de devant de la liaison entre le mécanisme de coupe et la poutre porteuse de la faucheuse en position de transport ;
- la figure 10 représente, à une échelle agrandie, la zone X de la figure 8 ;
- la figure 11 représente, à une échelle agrandie, la zone XI de la figure 8 ;
- la figure 12 représente une coupe par le plan XII défini sur la figure 9.

La faucheuse (1) telle que représentée sur les différentes figures, est conforme à celle décrite dans la demande de brevet français N° 94 05429. La description qui va suivre, porte donc essentiellement sur l'objet de la présente invention. Pour tous les autres détails, on se reportera, en cas de besoin, au texte de ladite demande de brevet.

La faucheuse (1), conforme à la présente invention, comporte un mécanisme de coupe (2), une structure d'attelage (3) à trois points d'attelage (4, 4') et une poutre porteuse (5) liant le mécanisme de coupe (2) à la structure d'attelage (3).

Au travail, la faucheuse (1) est attelée, au moyen de la structure d'attelage (3), au dispositif (6) de levage à trois points d'un tracteur agricole (7) (seul le dispositif de levage (6) de celui-ci a été représenté) de telle sorte que le mécanisme de coupe (2) s'étende, vu suivant la direction de travail (8A), latéralement à côté de la voie dudit tracteur agricole (7) et transversalement à la direction de travail (8A) (dans l'exemple représenté, le mécanisme de coupe (2) s'étend même au moins sensiblement orthogonalement à la direction de travail (8A)). C'est la position de travail (A).

Le mécanisme de coupe (2) ne sera pas décrit en détail : il peut en effet s'agir de n'importe quel type de mécanisme de coupe (dans l'exemple représenté, il s'agit d'un mécanisme de coupe communément appelé "à disques").

Ce mécanisme de coupe (2) est lié à la poutre porteuse (5) au moyen d'une articulation (9) du type pivot d'axe (9A) dirigé vers l'avant lorsque le mécanisme de coupe (2) est en position de travail (A) (dans l'exemple représenté, l'axe (9A) est au moins sensiblement dirigé suivant la direction de travail (8A)). Cette articulation (9) s'étend du reste presque dans le plan vertical dirigé suivant la direction de travail (8A) et contenant le centre des masses du mécanisme de coupe (2). Elle s'étend par ailleurs à la partie supérieure du mécanisme de coupe (2) et permet à ce dernier de pivoter d'un certain angle par rapport à la poutre porteuse (5) dans un plan orthogonal à l'axe (9A) de ladite articulation (9).

La poutre porteuse (5), quant à elle, est liée à la structure d'attelage (3) au moyen d'une articulation (10) et d'une articulation (11) de telle sorte que cette dernière permette le pivotement de l'articulation (10) conjointement avec la poutre porteuse (5) par rapport à la structure d'attelage (3). Cette articulation (10) est une articulation du type pivot d'axe (10A) dirigé vers l'avant lorsque le mécanisme de coupe (2) est en position de travail (A) (dans l'exemple représenté, l'axe (10A) est au moins sensiblement dirigé suivant la direction de travail (8A)). En vue suivant la direction de travail (8A), il apparaît du reste que l'articulation (10) s'étend au moins sensiblement au même niveau par rapport au sol que l'articulation (9). L'articulation (11) est également une articulation du type pivot mais d'axe (11A) dirigé vers le haut (dans l'exemple représenté, l'axe (11A) est au moins sensiblement vertical). Il apparaît par ailleurs que l'axe (10A) de l'articulation (10) et l'axe (11A) de l'articulation (11) sont au moins sensiblement sécants.

Cette articulation (9) et cette articulation (10) permettent au mécanisme de coupe (2) de suivre le relief du sol lors de la coupe.

L'animation des organes de coupe (12) du mécanisme de coupe (2) est réalisée par une source motrice qui est, dans l'exemple représenté, constituée par la prise de force (non représentée) du tracteur agricole (7). Toute autre source motrice est cependant envisageable. Celle-ci transmet le mouvement à un carter de renvoi (13) au moyen d'un premier arbre de transmission télescopique (14) à joints universels. Le carter de renvoi (13) est fixé sur la structure d'attelage (3) et s'étend, en vue suivant la direction de travail (8A), entre les deux points d'attelage inférieurs (4) de ladite structure d'attelage (3). Ce carter de renvoi (13) transmet lui-même le mouvement aux organes de coupe (12) du mécanisme de coupe (2) au moyen d'un deuxième arbre de transmission télescopique (15) à joints universels, qui s'étend transversalement à la direction de travail (8A) lorsque le mécanisme de coupe (2) est en position de travail (A). Il apparaît par ailleurs que l'articulation (10) et l'articulation (11) s'étendent dans le voisinage et quelque peu plus haut que le joint universel de l'arbre de transmission télescopique (15) situé du côté du carter de renvoi (13).

La faucheuse (1) comporte aussi un dispositif (16) de sécurité. Celui-ci maintient le mécanisme de coupe (2) dans sa position de travail (A), mais autorise le pivotement de ce dernier, conjointement avec la poutre porteuse (5), vers l'arrière autour de l'axe (11A) de l'articulation (11) au cas où le mécanisme de coupe (2) heurtait pendant le travail un obstacle se trouvant dans le champ.

Ce dispositif (16) de sécurité ne sera pas décrit dans le détail ; en cas de besoin on se reportera à la description qui en est donnée dans la demande de brevet français N° 94 05429.

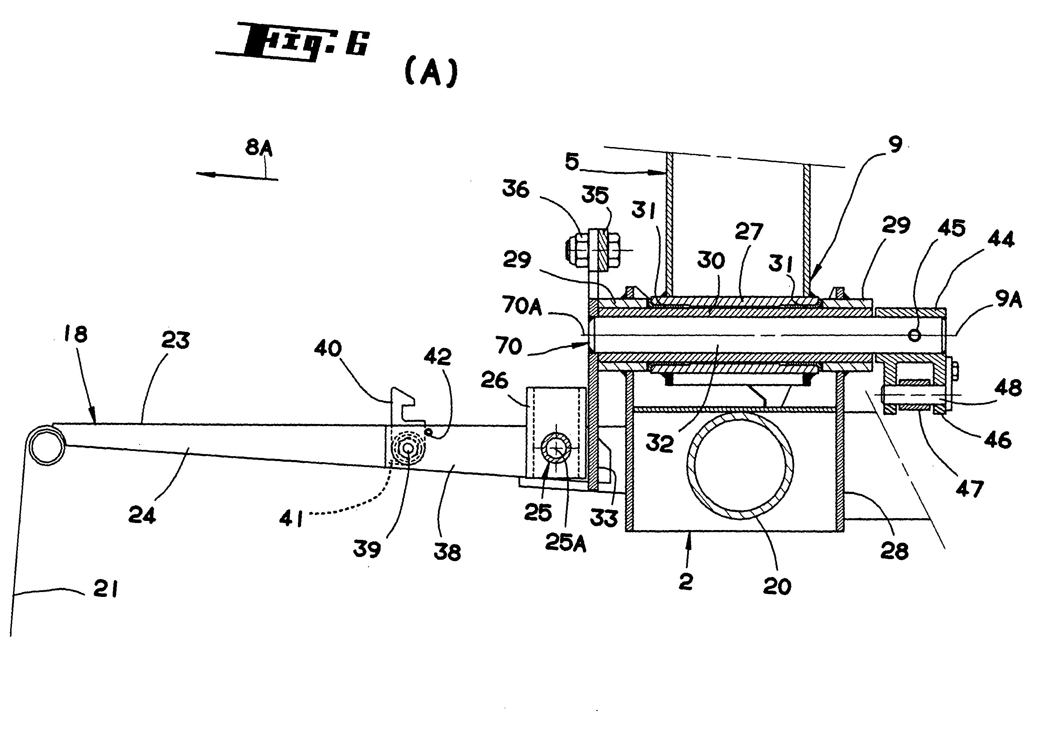

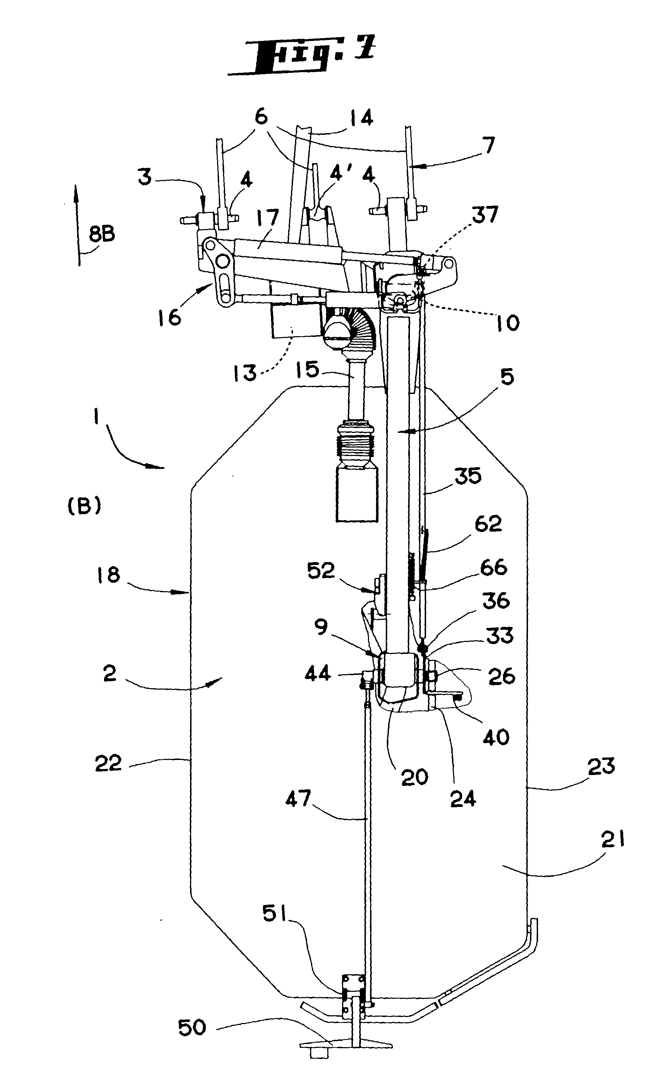

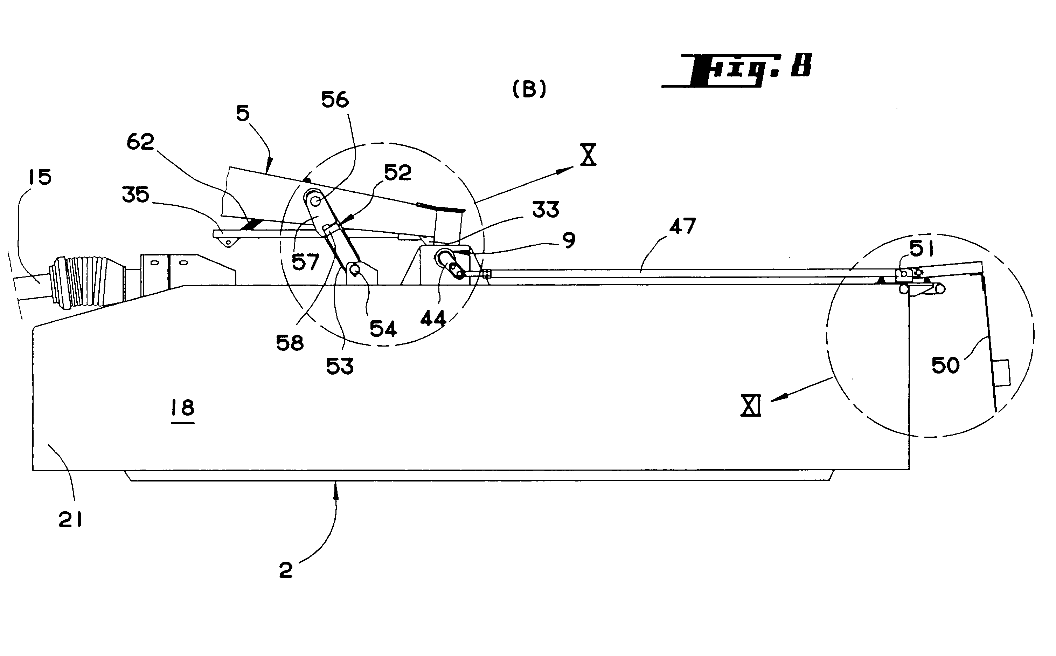

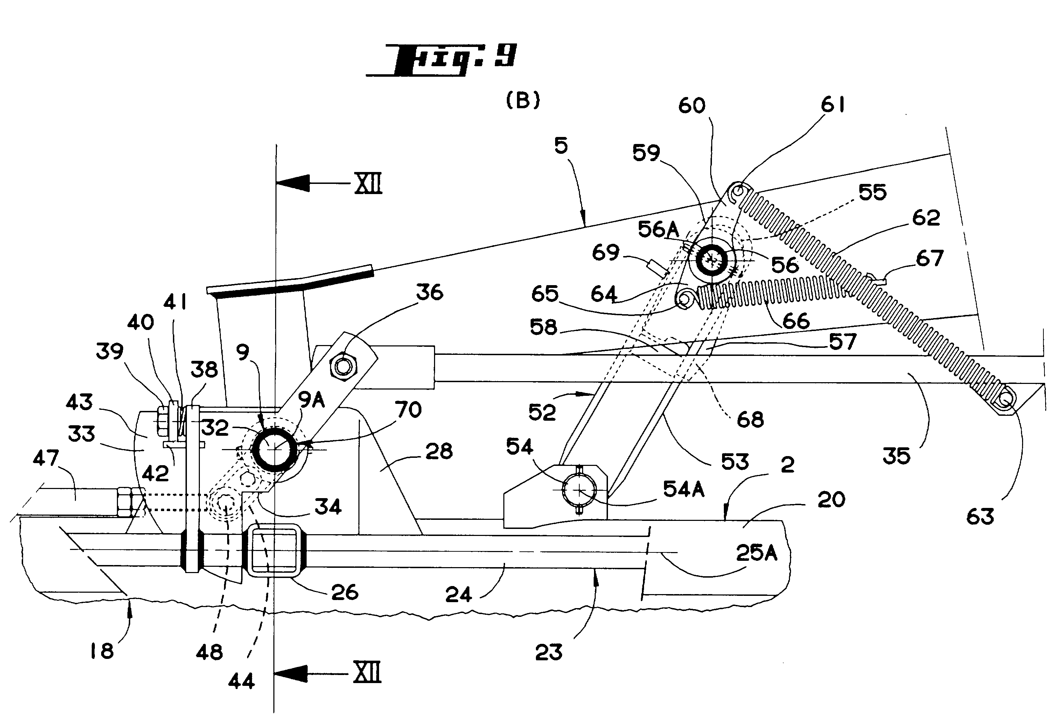

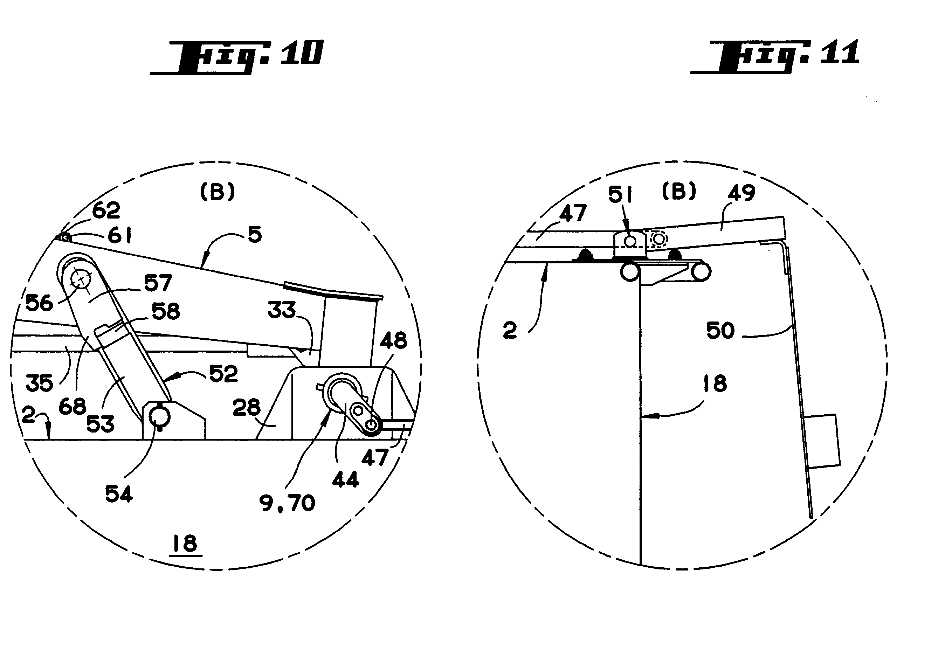

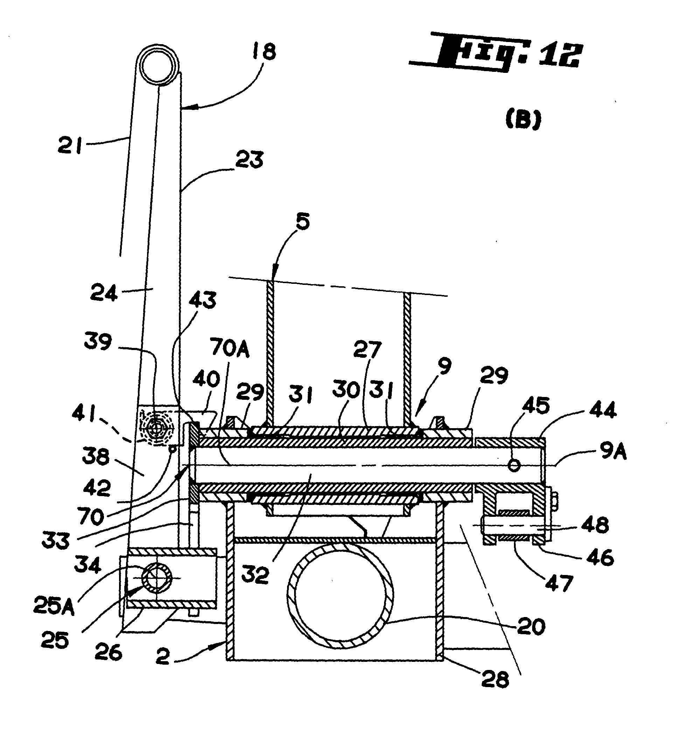

Il convient simplement d'indiquer que ce dispositif (16) de sécurité comporte un organe de manoeuvre (17) destiné entre autres à pivoter le mécanisme de coupe (2) conjointement avec la poutre porteuse (5) vers l'arrière jusque dans la position de transport (B) représentée sur les figures 7 à 12. Dans cette position, le mécanisme de coupe (2) et la poutre porteuse (5) se trouvent derrière le tracteur agricole (7) dans le prolongement de celui-ci. Dans cette position, on remarque par ailleurs que l'arbre de transmission télescopique (15) à joints universels s'étend essentiellement suivant la direction (8B) de déplacement au transport et que son joint universel situé du côté du carter de renvoi (13) présente un angle tellement important que l'arbre de transmission (15) est incapable de transmettre le mouvement aux organes de coupe (12) du mécanisme de coupe (2).

Dans l'exemple représenté, l'organe de manoeuvre (17) est constitué d'un vérin hydraulique double effet dont l'animation peut être assurée par une source hydraulique (non représentée) telle que la centrale hydraulique du tracteur agricole (7) par exemple.

Le mécanisme de coupe (2) comporte également un dispositif de protection (18) qui entoure les organes de coupe (12). Ce dispositif de protection (18) est destiné à éviter des accidents corporels en interdisant l'accès inopiné aux organes de coupe (12) et, selon la nature des organes de coupe (12), en empêchant la projection d'objets tels que des pierres par exemple.

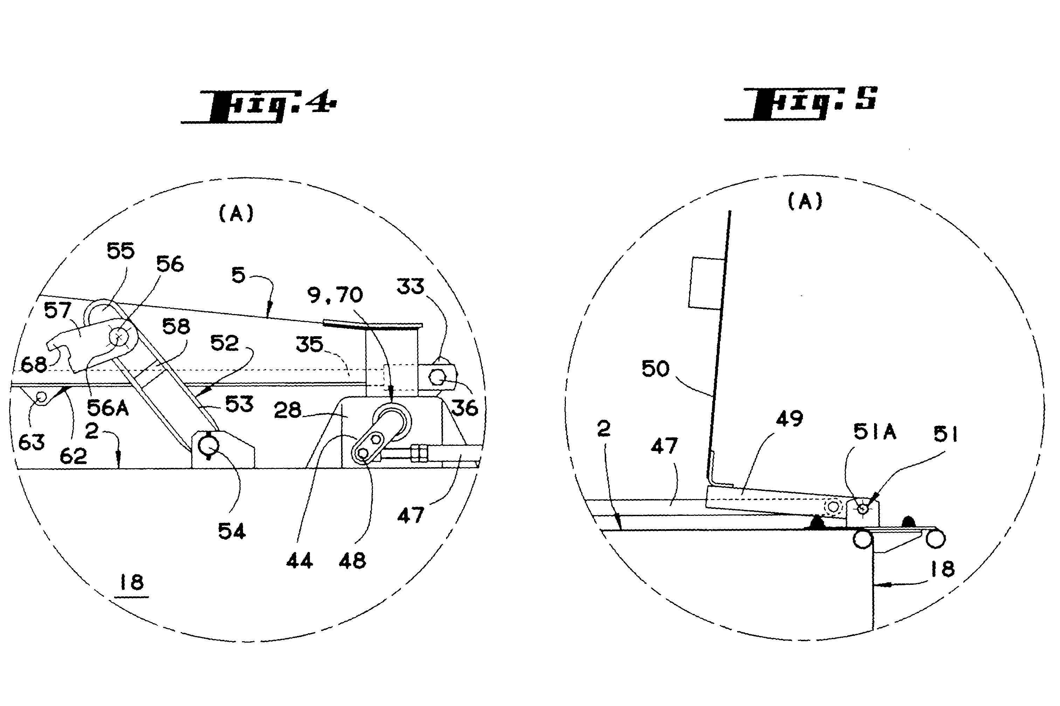

Ce dispositif de protection (18) est constitué d'une ossature (19) liée à un organe porteur (20) du mécanisme de coupe (2) et d'une toile (21) tendue sur ladite ossature (19) et fixée à celle-ci. Il comporte une partie arrière (22) fixe et une partie avant (23) mobile. La partie avant mobile (23) est réalisée sous forme de volet (24) qui est lié indirectement à l'organe porteur (20) à l'aide d'une articulation (25) (figures 6 et 12) dont l'axe de pivotement (25A) s'étend au moins sensiblement horizontalement et au moins sensiblement orthogonalement à la direction de travail (8A) lorsque le mécanisme de coupe (2) est en position de travail (A). La partie avant (23) du dispositif de protection (18) peut ainsi être pivotée vers le haut (figure 12) autour de l'axe de pivotement (25A) pour accéder aisément notamment aux organes de coupe (12) du mécanisme de coupe (2) en vue du contrôle de leur état et, le cas échéant, de leur remplacement. Dans le voisinage de l'articulation (9) liant le mécanisme de coupe (2) à la poutre porteuse (5), le volet (24) présente en sus un organe d'appui (26).

L'articulation (9) apparaît en détail sur les figures 6 et 12. A son extrémité extérieure, la poutre porteuse (5) est munie d'un fourreau (27). L'organe porteur (20) du mécanisme de coupe (2),quant à lui, présente une chape (28) dans chacune des ailes de laquelle est soudé un manchon (29) respectif. Un axe creux (30) est introduit dans les deux manchons (29) et est guidé en rotation dans le fourreau (27) au moyen de deux bagues (31).

L'alésage de l'axe creux (30) est traversé par un tourillon (32) dont l'axe longitudinal est confondu avec l'axe (9A) de l'articulation (9). Du côté du volet (24) du dispositif de protection (18), le tourillon (32) est muni d'une butée (33).

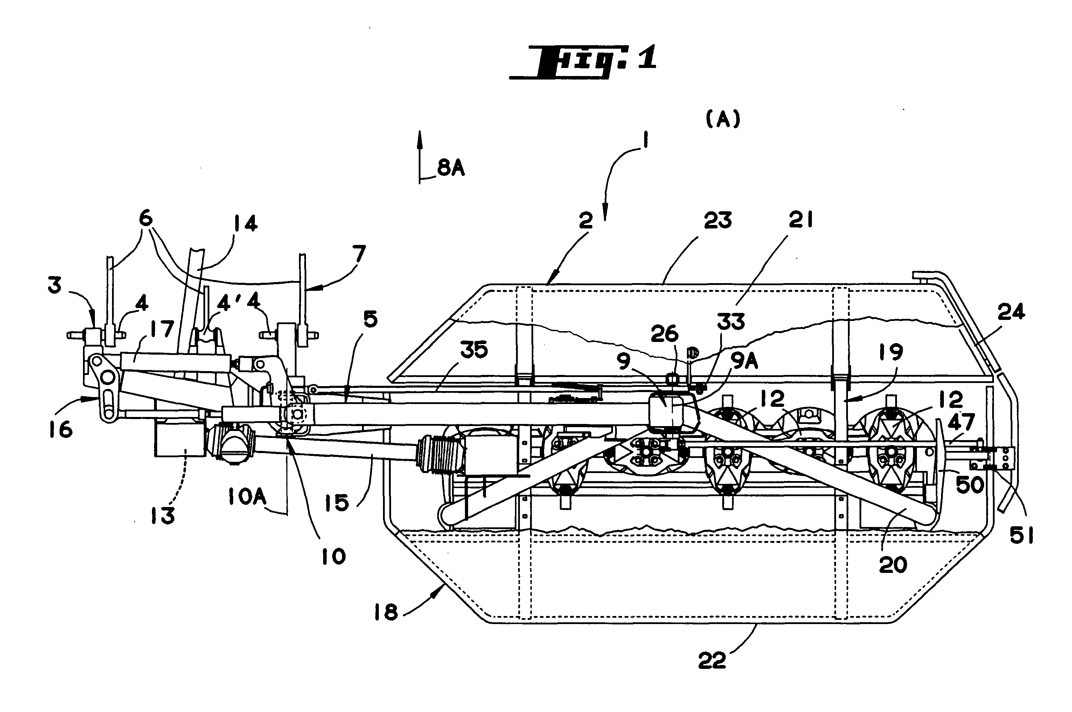

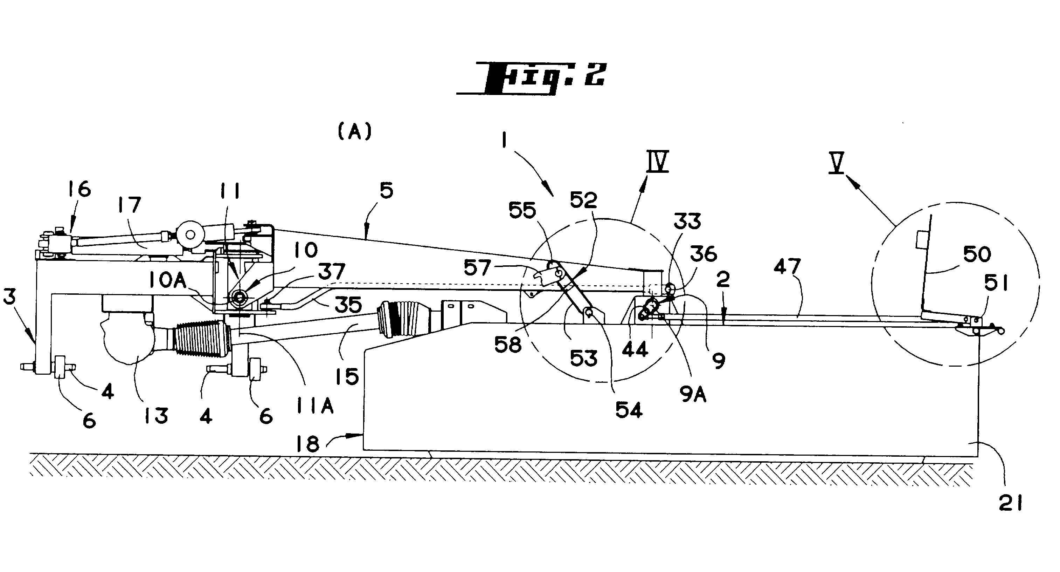

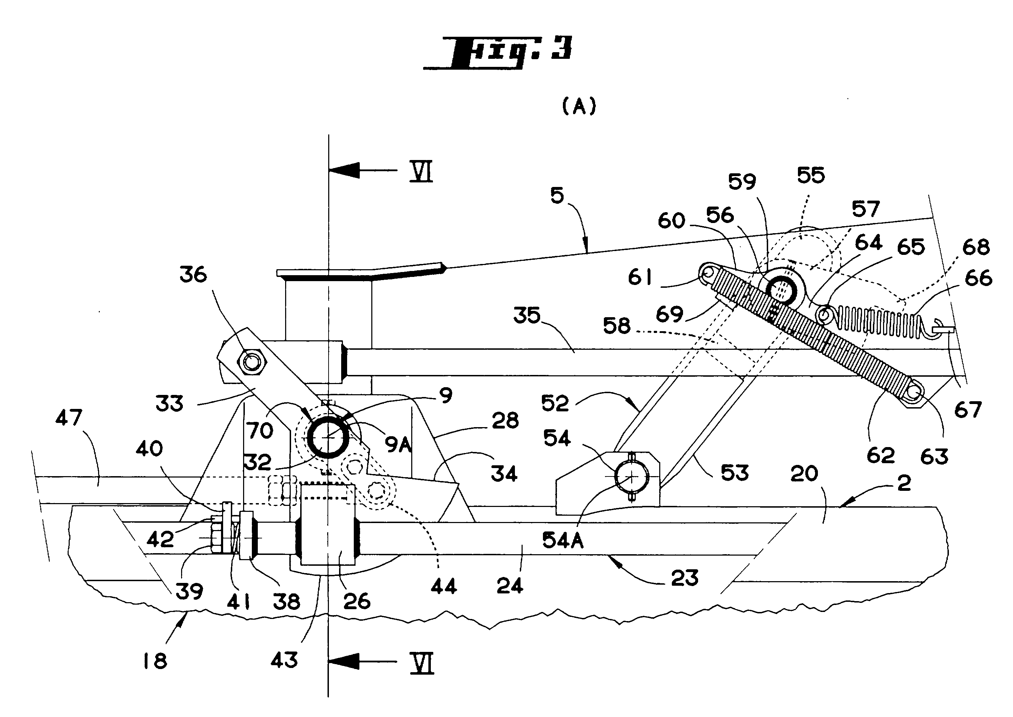

Celle-ci s'étend dans le voisinage de l'organe d'appui (26) dudit volet (24) et il apparaît très précisément sur les figures 3 et 6 que la forme et la position de ladite butée (33) sont telles que le volet (24) ne peut pas être pivoté vers le haut autour de l'axe de pivotement (25A) lorsque le mécanisme de coupe (2) se trouve en position de travail (A). Le pivotement du volet (24) vers le haut n'est possible que lorsque le mécanisme de coupe (2) se trouve en position de transport (B) (figures 9 et 12). A cet effet, la butée (33) a été pivotée de manière appropriée autour de l'axe (9A) et une découpe (34) y a été prévue de sorte que dans cette position, la butée (33) ne puisse plus empêcher la rotation de l'organe d'appui (26) lorsque le volet (24) est pivoté vers le haut.

Le pivotement de la butée (33) dans la position de verrouillage du volet (24) (figures 3 et 6), respectivement dans la position de déverrouillage du volet (24) (figures 9 et 12) autour de l'axe (9A) s'opère automatiquement lorsque le mécanisme de coupe (2) est mis dans sa position de travail (A), respectivement dans sa position de transport (B) par pivotement autour de l'axe (11A). A cet effet, il est prévu une tringle rigide (35) implantée entre la butée (33) et la structure d'attelage (3) auxquelles ladite tringle (35) est liée au moyen d'une articulation (36, 37) respective. L'emplacement de l'articulation (37) liant la tringle rigide (35) à la structure d'attelage (3) est tel que :
- lorsque le mécanisme de coupe (2) est mis en position de travail (A), la butée (33) est pivotée en position de verrouillage du volet (24),
- lorsque le mécanisme de coupe (2) est mis en position de transport (B), la butée (33) est pivotée en position de déverrouillage du volet (24).

A proximité de l'organe d'appui (26), le volet (24) comporte également une console (38). A son extrémité libre, la console (38) est munie d'un pivot (39) sur lequel peut pivoter un crochet (40) à l'encontre d'un ressort (41) qui applique ledit crochet (40) contre un taquet (42). En pivotant le volet (24) vers le haut autour de l'axe (25A), le crochet (40) s'accroche automatiquement à la butée (33) qui comporte une excroissance (43) prévue à cet effet. Le volet (24) est ainsi maintenu dans sa position non opérationnelle. Pour remettre le volet (24) dans sa position opérationnelle, il suffira de décrocher le crochet (40) et de pivoter le volet (24) vers le bas. Mais ce crochet (40) se décroche également automatiquement lors du pivotement du mécanisme de coupe (2) de la position de transport (B) dans la position de travail (A). En effet, il apparaît clairement que lors de ce pivotement, l'excroissance (43) de la butée (33) s'extrait automatiquement du crochet (40) en s'éloignant de celui-ci vers le bas. Dès lors, le volet (24) peut retourner automatiquement quement dans sa position opérationnelle sous l'effet de son poids propre. Mais il est également possible d'assister ce retour au moyen d'un organe d'assistance.

A l'extrémité opposée à celle où est fixée la butée (33), le tourillon (32) porte un bras (44) qui y est fixé au moyen d'une goupille (45). Ce bras (44) comporte une chape (46) à laquelle est articulée une deuxième tringle rigide (47) au moyen d'un pivot (48). A son autre extrémité, cette deuxième tringle rigide (47) est articulée à un bras porteur (49) qui porte une plaque de signalisation (50) et qui est lié à l'extrémité extérieure de la partie fixe de l'ossature (19) du dispositif de protection (18) au moyen d'une articulation (51) d'axe (51A) au moins sensiblement parallèle à l'axe (9A) de l'articulation (9). Il apparaît du reste que la longueur de la deuxième tringle (47) est avantageusement réglable afin de pouvoir positionner avec précision la plaque de signalisation (50) dans sa position opérationnelle.

Il convient de mentionner que la plaque de signalisation (50) se trouve en position opérationnelle lorsque le mécanisme de coupe (2) est en position de transport (B) et que ladite plaque de signalisation (50) est en position non opérationnelle lorsque le mécanisme de coupe (2) est en position de travail (A). On comprend que la mise de la plaque de signalisation (50) dans sa position opérationnelle, respectivement dans sa position non opérationnelle, se fait automatiquement lorsque le mécanisme de coupe (2) est amené dans sa position de transport (B), respectivement dans sa position de travail (A). En effet, en étant placé derrière le mécanisme de coupe (2) et en observant celui-ci pendant son pivotement depuis la position de travail (A) jusque dans la position de transport (B), on voit que la première tringle (35) tire sur la butée (33) et fait pivoter celle-ci conjointement avec le bras (44) autour de l'axe (9A) dans le sens anti-horaire. Ce faisant, le bras (44) pousse sur la deuxième tringle (47) laquelle fait pivoter le bras porteur (49) conjointement avec la plaque de signalisation (50) autour de l'axe (51A) dans le sens horaire. En position opérationnelle, la plaque de signalisation (50) s'étend au moins sensiblement verticalement à l'extrémité arrière du mécanisme de coupe (2) lorsque celui-ci est en position de transport (B). Cette plaque de signalisation (50) est parfaitement connue de l'homme du métier étant donné qu'elle est normalisée. On comprendra qu'en pivotant le mécanisme de coupe (2) depuis sa position de transport (B) jusque dans sa position de travail (A), le mécanisme décrit fait pivoter le bras porteur (49) conjointement avec la plaque de signalisation (50) dans la position non opérationnelle dans laquelle ladite plaque de signalisation (50) s'étend au-dessus du mécanisme de coupe (2) et ne gêne pas l'opération de coupe.

Comme expliqué précédemment, le mécanisme de coupe (2) peut, en position de travail (A), pivoter par rapport à la poutre porteuse (5) autour de l'axe (9A).
Ce pivotement est toutefois limité par un organe de limitation (52) agissant entre la poutre porteuse (5) et le mécanisme de coupe (2) ou plus précisément l'organe porteur (20) de celui-ci. L'organe de limitation (52) est d'ailleurs également prévu pour condamner le pivotement du mécanisme de coupe (2) autour de l'axe (9A) lorsque ledit mécanisme de coupe (2) est en position de transport (B).

L'organe de limitation (52) comporte un limiteur (53) qui est lié à l'organe porteur (20) au moyen d'une articulation (54) d'axe (54A) au moins sensiblement parallèle à l'axe (9A). A son extrémité en regard de la poutre porteuse (5), le limiteur (53) comporte une ouverture allongée (55). Celle-ci est traversée par un tourillon (56) d'axe longitudinal (56A) au moins sensiblement parallèle à l'axe (9A) et guidé en rotation dans la poutre porteuse (5) autour dudit axe longitudinal (56A). A son extrémité s'étendant en-dehors de l'ouverture allongée (55), le tourillon (56) est muni d'un verrou (57) qui y est goupillé. Ce verrou (57) est destiné à collaborer avec un arrêt (58) prévu sur le limiteur (53) à la base de l'ouverture allongée (55). A son autre extrémité, le tourillon (56) est muni d'un levier double (59). Ce levier double (59) comporte un premier bras (60) muni d'un plot (61) auquel est lié un premier ressort (62). A son autre extrémité, le premier ressort (62) est lié à un plot (63) de la première tringle (35). Le levier double (59) comporte également un deuxième bras (64) muni d'un plot (65) auquel est lié un deuxième ressort (66). A son autre extrémité, le deuxième ressort (66) est lié à un plot (67) de la poutre porteuse (5).

On comprendra que grâce à ce dispositif de limitation, la libération du pivotement du mécanisme de coupe (2) autour de l'axe (9A), respectivement la condamnation dudit pivotement, sont réalisées automatiquement lorsque le mécanisme de coupe (2) est pivoté en position de travail (A) autour de l'axe (11A), respectivement lorqu'il est pivoté en position de transport (B).

En effet, en étant placé devant le mécanisme de coupe (2) et en observant celui-ci pendant son pivotement depuis la position de travail (A) jusque dans la position de transport (B), on voit que la tringle (35) tire sur le premier ressort (62) lequel agit sur le levier double (59) qui pivote dans le sens horaire autour de l'axe longitudinal (56A) du tourillon (56). Ce faisant, le verrou (57) pivote également dans le sens horaire jusqu'en regard de l'arrêt (58) du limiteur (53), ledit pivotement étant stoppé par un nez (68) du verrou (57) venant latéralement en appui contre l'arrêt (58). Il va de soi que le verrou (57) est fermement maintenu dans cette position par le premier ressort (62).

Dans cette position, le tourillon (56) ne peut plus se déplacer dans l'ouverture allongée (55) ou du moins dans la limite des jeux prévus pour le bon fonctionnement du mécanisme. En pivotant, le levier double (59) agit sur le deuxième ressort (66). L'énergie ainsi emmagasinée par le deuxième ressort (66) servira à faire pivoter le levier double (59) et le verrou (57) dans le sens anti-horaire lorsque le mécanisme de coupe (2) sera à nouveau pivoté dans la position de travail (A). Dans la position de travail (A), le deuxième ressort (66) applique le levier double (59) contre un taquet (69) solidaire de la poutre porteuse (5). Il convient encore de préciser que la transmission du mouvement de la première tringle (35) au levier double (59) a été réalisée au moyen d'un ressort étant donné que les déplacements de ladite tringle (35) et du levier double (59) ne sont pas égaux. Il convient également de noter que l'articulation (9) est positionnée de manière telle qu'en décollant le mécanisme de coupe (2) du sol, l'extrémité de celui-ci située du côté de l'organe de limitation (52) se déplace vers le bas de telle sorte que le tourillon (56) se trouve toujours dans la partie haute de l'ouverture allongée (55).

Dans l'exemple de réalisation non limitatif qui vient d'être décrit,
- l'articulation (11) constitue la première articulation ;
- la première tringle (35) constitue le premier organe d'actionnement ;
- le crochet (40) constitue l'organe de maintien ;
- l'articulation (70) formée par le tourillon (32) et l'axe creux (30), constitue la deuxième articulation ; son axe (70A) est confondu avec l'axe (9A) de l'articulation (9) ;
- l'articulation (9) constitue la troisième articulation ; son axe (9A) est dirigé au moins sensiblement suivant la direction de travail (8A) lorsque le mécanisme de coupe (2) se trouve en position de travail (A) ;
- la deuxième tringle (47) constitue le second organe d'actionnement ;
- la butée (33), le tourillon (32) et le bras (44) constituent le moyen de couplage liant le second organe d'actionnement au premier organe d'actionnement ;
- l'articulation (51) constitue la quatrième articulation ;
- le premier ressort de traction (62), le deuxième ressort de traction (66) et le levier double (59) constituent le troisième organe d'actionnement ;
- le tourillon (56) constitue la cinquième articulation.

On comprendra tout d'abord que l'objet de la présente invention peut s'appliquer à une faucheuse différente de celle faisant l'objet de la demande de brevet français N° 94 05429.

On comprendra également que les divers organes d'actionnement pourront être du type hydraulique, pneumatique, etc.

On comprendra aussi que les organes d'entraînement des organes de coupe pourront avoir une structure différente, la seule condition à remplir étant de ne pas pouvoir assurer l'entraînement des organes de coupe et, le cas échéant, d'autres organes de travail (organes destinés à traiter le produit coupé par exemple) lorsque le mécanisme de coupe est dans la position de transport ou plus généralement dans la position où la partie mobile du dispositif de protection peut être déplacée.

Le mécanisme de coupe pourra être d'un type quelconque destiné à la récolte des fourrages, à l'entretien d'espaces verts, au broyage des végétaux, etc.

Il est même possible de lui adjoindre des organes destinés à traiter le produit coupé, tels que des organes de conditionnement par exemple.

## Revendications

1. Machine agricole destinée à la coupe de végétaux et comportant :
- une structure d'attelage (3) destinée à être liée à un véhicule moteur (7),
- un mécanisme de coupe (2) lié directement ou indirectement à la structure d'attelage (3) au moyen d'une première articulation (11) de sorte que ledit mécanisme de coupe (2) puisse être amené dans une position de travail (A) dans laquelle il s'étend transversalement à la direction de déplacement (8A), ou dans une autre position (B), ledit mécanisme de coupe (2) comportant des organes de coupe (12) et un dispositif de protection (18) enveloppant ceux-ci et dont une partie (23) peut être déplacée dans une position non opérationnelle,
et
- des organes d'entraînement (13, 14, 15) capables d'entraîner lesdits organes de coupe (12) lorsque ledit mécanisme de coupe (2) se trouve dans sa position de travail (A) et incapables d'assurer l'entraînement desdits organes de coupe (12) lorsque ledit mécanisme de coupe (2) se trouve dans l'autre position (B),
caractérisée en ce qu'elle comporte en sus une butée (33) qui empêche le déplacement de ladite partie (23) du dispositif de protection (18) dans la position non opérationnelle lorsque le mécanisme de coupe (2) se trouve en position de travail (A), et qui autorise au contraire ledit déplacement lorsque ledit mécanisme de coupe (2) se trouve dans l'autre position (B), la mise en place de ladite butée (33) se faisant automatiquement au moyen d'un organe d'actionnement (35) lorsque ledit mécanisme de coupe (2) est amené de ladite autre position (B) dans la position de travail (A).

2. Machine agricole destinée à la coupe de végétaux selon la revendication 1, caractérisée en ce que l'organe d'actionnement (35) commande également automatiquement l'escamotage de la butée (33) lorsque le mécanisme de coupe (2) est amené de la position de travail (A) dans l'autre position (B).

3. Machine agricole destinée à la coupe de végétaux selon la revendication 1 ou 2, caractérisée en ce qu'un organe de maintien (38, 39, 40, 41, 42) maintient ladite partie (23) du dispositif de protection (18) dans sa position non opérationnelle, l'action de cet organe de maintien (38, 39, 40, 41, 42) étant automatiquement neutralisée lorsque le mécanisme de coupe (2) est déplacé de l'autre position (B) dans la position de travail (A).

4. Machine agricole destinée à la coupe de végétaux selon la revendication 3, caractérisée en ce que l'organe de maintien (38, 39, 40, 41, 42) collabore avec la butée (33) lorsque le mécanisme de coupe (2) se trouve dans l'autre position (B).

5. Machine agricole destinée à la coupe de végétaux selon l'une quelconque des revendications 1 à 4, caractérisée en ce que l'organe d'actionnement (35) est constitué d'une tringle articulée entre la structure d'attelage (3) et la butée (33).

6. Machine agricole destinée à la coupe de végétaux selon l'une quelconque des revendications 1 à 5, caractérisée en ce que la butée (33) est liée directement ou indirectement au mécanisme de coupe (2) et se déplace conjointement avec ledit mécanisme de coupe (2) lorsque celui-ci est déplacé entre la position de travail (A) et l'autre position (B).

7. Machine agricole destinée à la coupe de végétaux selon la revendication 6, caractérisée en ce que la butée (33) est liée directement ou indirectement au mécanisme de coupe (2) au moyen d'une deuxième articulation (70) d'axe (70A).

8. Machine agricole destinée à la coupe de végétaux selon la revendication 7, caractérisée en ce que l'axe (70A) de la deuxième articulation (70) est dirigé vers l'avant lorsque le mécanisme de coupe (2) se trouve en position de travail (A).

9. Machine agricole destinée à la coupe de végétaux selon la revendication 7 ou 8, caractérisée en ce que le mécanisme de coupe (2) est lié à la structure d'attelage (3) au moyen d'une poutre porteuse (5) liée d'une part au mécanisme de coupe (2) à l'aide d'une troisième articulation (9) d'axe (9A) dirigé vers l'avant lorsque le mécanisme de coupe (2) se trouve en position de travail (A), et d'autre part à la structure d'attelage (3) à l'aide de la première articulation (11), l'axe (9A) de cette troisième articulation (9) étant confondu avec l'axe (70A) de la deuxième articulation (70).

10. Machine agricole destinée à la coupe de végétaux selon l'une quelconque des revendications 7 à 9, caractérisée en ce que l'axe (70A) de la deuxième articulation (70) et/ou l'axe (9A) de la troisième articulation (9) sont dirigés au moins sensiblement suivant la direction de déplacement (8A) lorsque le mécanisme de coupe (2) se trouve en position de travail (A).

11. Machine agricole destinée à la coupe de végétaux selon l'une quelconque des revendications 1 à 10, caractérisée en ce que la partie (23) du dispositif de protection (18) pouvant être déplacée est un volet (24) pouvant être pivoté autour d'un axe de pivotement (25A).

12. Machine agricole destinée à la coupe de végétaux selon la revendication 11, caractérisée en ce que l'axe de pivotement (25A) autour duquel peut pivoter le volet (24) du dispositif de protection (18), est, en position de travail (A) du mécanisme de coupe (2), au moins sensiblement horizontal et transversal à la direction de déplacement (8A).

13. Machine agricole destinée à la coupe de végétaux selon la revendication 11 ou 12 et l'une quelconque des revendications 7 à 10, caractérisée en ce que ledit axe de pivotement (25A) est au moins sensiblement orthogonal à l'axe (70A) de la deuxième articulation (70).

14. Machine agricole destinée à la coupe de végétaux selon l'une quelconque des revendications 1 à 13, caractérisée en ce que ladite partie (23) se trouve à l'avant du dispositif de protection (18) lorsque le mécanisme de coupe (2) est en position de travail (A).

15. Machine agricole destinée à la coupe de végétaux selon l'une quelconque des revendications 1 à 14, caractérisée en ce que l'autre position (B) que peut occuper le mécanisme de coupe (2), est une position de transport.

16. Machine agricole destinée à la coupe de végétaux selon la revendication 15, caractérisée en ce qu'une plaque de signalisation (50) qui est liée directement ou indirectement au mécanisme de coupe (2) est déplacée automatiquement au moyen d'un second organe d'actionnement (47) dans une position opérationnelle lorsque le mécanisme de coupe (2) est placé dans la position de transport (B), et dans une position non opérationnelle où elle ne gêne pas la coupe des végétaux, lorsque le mécanisme de coupe (2) est déplacé en position de travail (A).

17. Machine agricole destinée à la coupe de végétaux selon la revendication 16, caractérisée en ce qu'un moyen de couplage (32, 33, 44, 45) lie le second organe d'actionnement (47) au premier organe d'actionnement (35).

18. Machine agricole destinée à la coupe de végétaux selon la revendication 17 et l'une quelconque des revendications 7 à 10, caractérisée en ce que la deuxième articulation (70) comporte un tourillon (32) à une extrémité duquel est fixée la butée (33) et à l'autre extrémité duquel est fixé un bras (44), et que le second organe d'actionnement (47) est constitué d'une tringle articulée entre ledit bras (44) et un bras porteur (49) de la plaque de signalisation (50).

19. Machine agricole destinée à la coupe de végétaux selon la revendication 18, caractérisée en ce que la longueur de la tringle (47) est réglable.

20. Machine agricole destinée à la coupe de végétaux selon l'une quelconque des revendications 16 à 19, caractérisée en ce que la plaque de signalisation (50) est liée directement ou indirectement au mécanisme de coupe (2) au moyen d'une quatrième articulation (51) de sorte à pouvoir être déplacée dans la position opérationnelle et dans la position non opérationnelle par pivotement autour de l'axe (51A) de ladite quatrième articulation (51).

21. Machine agricole destinée à la coupe de végétaux selon la revendication 20, caractérisée en ce que l'axe (51A) de la quatrième articulation (51) est dirigé vers l'avant lorsque le mécanisme de coupe (2) se trouve dans la position de travail (A).

22. Machine agricole destinée à la coupe de végétaux selon la revendication 20 ou 21 et l'une quelconque des revendications 7 à 10, caractérisée en ce que l'axe (51A) de ladite quatrième articulation (51) est au moins sensiblement parallèle à l'axe (70A) de la deuxième articulation (70).

23. Machine destinée à la coupe de végétaux selon l'une quelconque des revendications 16 à 22, caractérisée en ce que l'axe (11A) de la première articulation (11) est dirigé vers le haut et que la plaque de signalisation (50) est prévue à l'extrémité extérieure du mécanisme de coupe (2) éloignée de la structure d'attelage (3).

24. Machine agricole destinée à la coupe de végétaux selon l'une quelconque des revendications 1 à 23, caractérisée en ce que le mécanisme de coupe (2) est lié à la structure d'attelage (3) au moyen d'une poutre porteuse (5) liée d'une part au mécanisme de coupe (2) à l'aide d'une troisième articulation (9) d'axe (9A) dirigé vers l'avant lorsque le mécanisme de coupe (2) se trouve en position de travail (A), et d'autre part à la structure d'attelage (3) à l'aide de la première articulation (11), un organe de limitation (52) agissant entre ledit mécanisme de coupe (2) et ladite poutre porteuse (5), limite le pivotement du mécanisme de coupe (2) par rapport à la poutre porteuse (5) autour de l'axe (9A) de ladite troisième articulation (9) au cours du travail et verrouille ledit pivotement lors du transport, le verrouillage, respectivement le déverrouillage dudit pivotement étant réalisé automatiquement au moyen d'un troisième organe d'actionnement (59, 62, 66) lorsque le mécanisme de coupe (2) est déplacé dans une position de transport (B), respectivement dans la position de travail (A).

25. Machine agricole destinée à la coupe de végétaux selon la revendication 24 ou les revendications 24 et 16, caractérisée en ce que le troisième organe d'actionnement (59, 62, 66) est lié à l'un des organes d'actionnement (35, 47).

26. Machine agricole destinée à la coupe de végétaux selon la revendication 25, caractérisée en ce que le troisième organe d'actionnement (59, 62, 66) est lié au premier organe d'actionnement (35).

27. Machine agricole destinée à la coupe de végétaux selon la revendication 24, 25 ou 26, caractérisée en ce que l'organe de limitation (52) comporte un limiteur (53) muni d'un trou allongé (55) et un verrou (57) lié à la poutre porteuse (5) au moyen d'une cinquième articulation laquelle est matérialisée par un tourillon (56) traversant simultanément l'ouverture allongée (55) dudit limiteur (53).

28. Machine agricole destinée à la coupe de végétaux selon la revendication 27, caractérisée en ce que l'axe (56A) de la cinquième articulation est au moins sensiblement parallèle à la direction de déplacement (8A) lorsque le mécanisme de coupe (2) se trouve en position de travail (A).

29. Machine agricole destinée à la coupe de végétaux selon la revendication 27 ou 28, caractérisée en ce que le troisième organe d'actionnement (59, 62, 66) comporte deux organes élastiquement déformables (62, 66) dont l'un (62) assure la mise en place du verrou (57) tandis que l'autre (66) assure la neutralisation de celui-ci.

30. Machine agricole destinée à la coupe de végétaux selon la revendication 29,
caractérisée en ce que les organes élastiquement déformables (62, 66) sont constitués de ressorts de traction.

## Claims

1. Agricultural machine intended for cutting plant matter and comprising:
- a hitching structure (3) intended to be connected to a motor vehicle (7),
- a cutting mechanism (2) connected directly or indirectly to the hitching structure (3) by means of a first articulation (11) so that the said cutting mechanism (2) can be brought into a work position (A) in which it extends transversely to the direction of forward travel (8A), or into another position (B), the said cutting mechanism (2) comprising cutting members (12) and a guard (18) surrounding these, a part (23) of which can be moved into a non-operational position,
and
- drive members (13, 14, 15) capable of driving the said cutting members (12) when the said cutting mechanism (2) is in its work position (A) and incapable of providing drive to the said cutting members (12) when the said cutting mechanism (2) is in the other position (B),
***characterized in*** that it additionally comprises a stop (33) which prevents the said part (23) of the guard (18) from moving into the non-operational position when the cutting mechanism (2) is in the work position (A), and which, conversely, allows the said movement when the said cutting mechanism (2) is in the other position (B), the said stop (33) being brought into position automatically by means of an actuating member (35) when the said cutting mechanism (2) is brought from the said other position (B) to the work position (A).

2. Agricultural machine intended for cutting plant matter according to Claim 1,
***characterized in*** that the actuating member (35) also automatically controls the retraction of the stop (33) when the cutting mechanism (2) is brought from the work position (A) into the other position (B).

3. Agricultural machine intended for cutting plant matter according to Claim 1 or 2, ***characterized in*** that a holding member (38, 39, 40, 41 42) holds the said part (23) of the guard (18) in its non-operational position, the action of this holding member (38, 39, 40, 41, 42) being automatically cancelled when the cutting mechanism (2) is moved from the other position (B) into the work position (A).

4. Agricultural machine intended for cutting plant matter according to Claim 3,
***characterized in*** that the holding member (38, 39, 40, 41 42) collaborates with the stop (33) when the cutting mechanism (2) is in the other position (B).

5. Agricultural machine intended for cutting plant matter according to any one of Claims 1 to 4, ***characterized in*** that the actuating member (35) consists of a rod articulated between the hitching structure (3) and the stop (33).

6. Agricultural machine intended for cutting plant matter according to any one of Claims 1 to 5, ***characterized in*** that the stop (33) is connected directly or indirectly to the cutting mechanism (2) and moves with the said cutting mechanism (2) when the latter is moved between the work position (A) and the other position (B).

7. Agricultural machine intended for cutting plant matter according to Claim 6,
***characterized in*** that the stop (33) is connected directly or indirectly to the cutting mechanism (2) by means of a second articulation (70) of axis (70A).

8. Agricultural machine intended for cutting plant matter according to Claim 7,
***characterized in*** that the axis (70A) of the second articulation (70) is directed forward when the cutting mechanism (2) is in the work position (A).

9. Agricultural machine intended for cutting plant matter according to Claim 7 or 8, ***characterized in*** that the cutting mechanism (2) is connected to the hitching structure (3) by means of a carrying beam (5) connected, on the one hand, to the cutting mechanism (2) by means of a third articulation (9), the axis (9A) of which is directed forward when the cutting mechanism (2) is in the work position (A) and, on the other hand, to the hitching structure (3) by means of the first articulation (11), the axis (9A) of this third articulation (9) being coincident with the axis (70A) of the second articulation (70).

10. Agricultural machine intended for cutting plant matter according to any one of Claims 7 to 9, ***characterized in*** that the axis (70A) of the second articulation (70) and/or the axis (9A) of the third articulation (9) are directed at least substantially in the direction of forward travel (8A) when the cutting mechanism (2) is in the work position (A).

11. Agricultural machine intended for cutting plant matter according to any one of Claims 1 to 10, ***characterized in*** that the part (23) of the guard (18) that can be moved is a flap (24) which can be pivoted about a pivot axis (25A).

12. Agricultural machine intended for cutting plant matter according to Claim 11, ***characterized in*** that the pivot axis (25A) about which the flap (24) of the guard (18) can pivot is, when the cutting mechanism (2) is in the work position (A), at least substantially horizontal and transversal to the direction of forward travel (8A).

13. Agricultural machine intended for cutting plant matter according to Claim 11 or 12, and any one of Claims 7 to 10, ***characterized in*** that the said pivot axis (25A) is at least substantially orthogonal to the axis (70A) of the second articulation (70).

14. Agricultural machine intended for cutting plant matter according to any one of Claims 1 to 13, ***characterized in*** that the said part (23) is at the front of the guard (18) when the cutting mechanism (2) is in the work position (A).

15. Agricultural machine intended for cutting plant matter according to any one of Claims 1 to 14, ***characterized in*** that the other position (B) that the cutting mechanism (2) may occupy is a transport position.

16. Agricultural machine intended for cutting plant matter according to Claim 15, ***characterized in*** that a signalling plate (50) which is connected directly or indirectly to the cutting mechanism (2) is moved automatically by means of a second actuating member (47) into an operational position when the cutting mechanism (2) is placed in the transport position (B), and into a non-operational position in which it does not impede the cutting of the plant matter when the cutting mechanism (2) is moved into the work position (A).

17. Agricultural machine intended for cutting plant matter according to Claim 16, ***characterized in*** that a coupling means (32, 33, 44, 45) connects the second actuating member (47) to the first actuating member (35).

18. Agricultural machine intended for cutting plant matter according to Claim 17, and any one of Claims 7 to 10, ***characterized in*** that the second articulation (70) comprises a journal (32) to one end of which the stop (33) is fixed and to the other end of which an arm (44) is fixed, and in that the second actuating member (47) consists of a rod articulated between the said arm (44) and an arm (49) carrying the signalling plate (50).

19. Agricultural machine intended for cutting plant matter according to Claim 18, ***characterized in*** that the length of the rod (47) is adjustable.

20. Agricultural machine intended for cutting plant matter according to any one of Claims 16 to 19, ***characterized in*** that the signalling plate (50), is connected directly or indirectly to the cutting mechanism (2) by means of a fourth articulation (51) so that it can be moved into the operational position and into the non-operational position by pivoting about the axis (51 A) of the said fourth articulation (51).

21. Agricultural machine intended for cutting plant matter according to Claim 20, ***characterized in*** that the axis (51A) of the fourth articulation (51) is directed forward when the cutting mechanism (2) is in the work position (A).

22. Agricultural machine intended for cutting plant matter according to Claim 20 or 21, and any one of Claims 7 to 10, ***characterized in*** that the axis (51A) of the said fourth articulation (51) is at least substantially parallel to the axis (70A) of the second articulation (70).

23. Agricultural machine intended for cutting plant matter according to any one of Claims 16 to 22, ***characterized in*** that the axis (11A) of the first articulation (11) is directed upwards and in that the signalling plate (50) is provided at the outer end of the cutting mechanism (2) remote from the hitching structure (3).

24. Agricultural machine intended for cutting plant matter according to any one of Claims 1 to 23, ***characterized in*** that the cutting mechanism (2) is connected to the hitching structure (3) by means of a carrying beam (5) connected on the one hand to the cutting mechanism (2) by means of a third articulation (9), the axis (9A) of which is directed forward when the cutting mechanism (2) is in the work position (A) and, on the other hand, to the hitching structure (3) by means of the first articulation (11), a limiting member (52) acting between the said cutting mechanism (2) and the said carrying beam (5) limits the pivoting of the cutting mechanism (2) with respect to the carrying beam (5) about the axis (9A) of the said third articulation (9) during work and locks the said pivoting during transport, the locking and respectively the unlocking of the said pivoting being performed automatically by means of a third actuating member (59, 62, 66) when the cutting mechanism (2) is moved, respectively, into a transport position (B) or into a work position (A).

25. Agricultural machine intended for cutting plant matter according to Claim 24 or Claims 24 and 16, ***characterized in*** that the third actuating member (59, 62, 66) is connected to one of the actuating members (35, 47).

26. Agricultural machine intended for cutting plant matter according to Claim 25, ***characterized in*** that the third actuating member (59, 62, 66) is connected to the first actuating member (35).

27. Agricultural machine intended for cutting plant matter according to Claim 24, 25, or 26, ***characterized in*** that the limiting member (52) comprises a limiter (53) equipped with an elongate hole (55) and a lock (57) connected to the carrying beam (5) by means of a fifth articulation which is embodied by a journal (56) passing simultaneously through the elongate opening (55) in the said limiter (53).

28. Agricultural machine intended for cutting plant matter according to Claim 27, ***characterized in*** that the axis (56A) of the fifth articulation is at least substantially parallel to the direction of forward travel (8A) when the cutting mechanism (2) is in the work position (A).

29. Agricultural machine intended for cutting plant matter according to Claim 27 or 28, ***characterized in*** that the third actuating member (59, 62, 66) comprises two elastically deformable members (62, 66) one (62) of which is for putting the lock (57) in its position while the other (66) of them is for cancelling its action.

30. Agricultural machine intended for cutting plant matter according to Claim 29, ***characterized in*** that the elastically deformable members (62, 66) consist of tension springs.

## Patentansprüche

1. Landmaschine zum Schneiden von Pflanzengut und mit
- einer Kupplungsvorrichtung (3), die mit einem Motorfahrzeug (7) verbunden werden soll,
- einem Schneidmechanismus (2), der mittels eines ersten Gelenks (11) direkt oder indirekt so mit der Kupplungsvorrichtung (3) verbunden ist, daß der Schneidmechanismus (2) in eine Arbeitsstellung (A), in der er sich quer zur Bewegungsrichtung (8A) erstreckt, oder in eine andere Stellung (B) gebracht werden kann, wobei der Schneidmechanismus (2) Schneidelemente (12) und eine diese umgebende Schutzvorrichtung (18) umfaßt, von der ein Teil (23) in eine Außerbetriebsstellung bewegt werden kann,
und
- Antriebselemente (13, 14, 15), die die Schneidelemente (12) antreiben können, wenn sich der Schneidmechanismus (2) in seiner Arbeitsstellung
(A) befindet, und die Schneidelemente (12) nicht antreiben können, wenn sich der Schneidmechanismus (2) in der anderen Stellung (B) befindet,
***dadurch gekennzeichnet,*** daß sie des weiteren einen Anschlag (33) aufweist, der die Bewegung des Teils (23) der Schutzvorrichtung (18) in die Außerbetriebsstellung verhindert, wenn sich der Schneidmechanismus (2) in Arbeitsstellung (A) befindet, und der hingegen die Bewegung gestattet, wenn sich der Schneidmechanismus (2) in der anderen Stellung (B) befindet, wobei die Anordnung des Anschlags (33) mittels eines Betätigungselements (35) automatisch erfolgt, wenn der Schneidmechanismus (2) aus der anderen Stellung (B) in Arbeitsstellung (A) gebracht wird.

2. Landmaschine zum Schneiden von Pflanzengut nach Anspruch 1, ***dadurch gekennzeichnet,*** daß das Betätigungselement (35) das Einklappen des Anschlags (33) ebenfalls automatisch steuert, wenn der Schneidmechanismus (2) aus der Arbeitsstellung (A) in die andere Stellung
(B) gebracht wird.

3. Landmaschine zum Schneiden von Pflanzengut nach Anspruch 1 oder 2,
***dadurch gekennzeichnet,*** daß ein Halteelement (38, 39, 40, 41, 42) den Teil (23) der Schutzvorrichtung (18) in seiner Außerbetriebsstellung hält, wobei die Wirkung dieses Halteelement (38, 39, 40, 41, 42) automatisch außer Kraft gesetzt wird, wenn der Schneidmechanismus (2) aus der anderen Stellung (B) in die Arbeitsstellung (A) bewegt wird.

4. Landmaschine zum Schneiden von Pflanzengut nach Anspruch 3, ***dadurch gekennzeichnet,*** daß das Halteelement (38, 39, 40, 41, 42) mit dem Anschlag (33) zusammenwirkt, wenn sich der Schneidmechanismus (2) in der anderen Stellung (B) befindet.

5. Landmaschine zum Schneiden von Pflanzengut nach irgend einem der Ansprüche 1 bis 4, ***dadurch gekennzeichnet,*** daß das Betätigungsglied (35) aus einer zwischen der Kupplungsvorrichtung (3) und dem Anschlag (33) angelenkten Stange besteht.

6. Landmaschine zum Schneiden von Pflanzengut nach irgend einem der Ansprüche 1 bis *5,* ***dadurch gekennzeichnet,*** daß der Anschlag (33) direkt oder indirekt mit dem Schneidmechanismus (2) verbunden ist und sich zusammen mit dem Schneidmechanismus (2) bewegt, wenn dieser zwischen der Arbeitsstellung (A) und der anderen Stellung (B) bewegt wird.

7. Landmaschine zum Schneiden von Pflanzengut nach Anspruch 6, ***dadurch gekennzeichnet,*** daß der Anschlag (33) mittels eines zweiten Gelenks (70) mit einer Achse (70A) direkt oder indirekt mit dem Schneidmechanismus (2) verbunden ist.

8. Landmaschine zum Schneiden von Pflanzengut nach Anspruch 7, ***dadurch gekennzeichnet,*** daß die Achse (70A) des zweiten Gelenks (70) nach vorne gerichtet ist, wenn sich der Schneidmechanismus (2) in Arbeitsstellung (A) befindet.

9. Landmaschine zum Schneiden von Pflanzengut nach Anspruch 7 oder 8,
***dadurch gekennzeichnet,*** daß der Schneidmechanismus (2) mit der Kupplungsvorrichtung (3) verbunden ist; diese Verbindung erfolgt mittels eines Trägers (5), der einerseits mittels eines dritten Gelenks (9) mit einer Achse (9A), die nach vorne gerichtet ist, wenn sich der Schneidmechanismus (2) in Arbeitsstellung (A) befindet, mit dem Schneidmechanismus (2) verbunden ist und andererseits mittels des ersten Gelenks (11) mit der Kupplungsvorrichtung (3) verbunden ist, wobei die Achse (9A) dieses dritten Gelenks (9) mit der Achse (70A) des zweiten Gelenks (70) zusammenfällt.

10. Landmaschine zum Schneiden von Pflanzengut nach irgend einem der Ansprüche 7 bis 9, ***dadurch gekennzeichnet,*** daß die Achse (70A) des zweiten Gelenks (70) und/oder die Achse (9A) des dritten Gelenks (9) zumindest im wesentlichen in Bewegungsrichtung (8A) gerichtet sind, wenn sich der Schneidmechanismus (2) in Arbeitsstellung (A) befindet.

11. Landmaschine zum Schneiden von Pflanzengut nach irgend einem der Ansprüche 1 bis 10, ***dadurch gekennzeichnet,*** daß der bewegbare Teil (23) der Schutzvorrichtung (18) eine Klappe (24) ist, die um eine Schwenkachse (25A) geschwenkt werden kann.

12. Landmaschine zum Schneiden von Pflanzengut nach Anspruch 11, ***dadurch gekennzeichnet,*** daß die Schwenkachse (25A), um die die Klappe (24) der Schutzvorrichtung (18) schwenken kann, in Arbeitsstellung (A) des Schneidmechanismus (2) zumindest im wesentlichen horizontal und quer zur Bewegungsrichtung (8A) verläuft.

13. Landmaschine zum Schneiden von Pflanzengut nach Anspruch 11 oder 12 und irgend einem der Ansprüche 7 bis 10, ***dadurch gekennzeichnet,*** daß die Schwenkachse (25A) zumindest im wesentlichen senkrecht zur Achse (70A) des zweiten Gelenks (70) verläuft.

14. Landmaschine zum Schneiden von Pflanzengut nach irgend einem der Ansprüche 1 bis 13, ***dadurch gekennzeichnet,*** daß sich der Teil (23) vorne an der Schutzvorrichtung (18) befindet, wenn der Schneidmechanismus (2) in Arbeitsstellung (A) positioniert ist.

15. Landmaschine zum Schneiden von Pflanzengut nach irgend einem der Ansprüche 1 bis 14, ***dadurch gekennzeichnet,*** daß die andere Stellung (B), die der Schneidmechanismus (2) einnehmen kann, eine Transportstellung ist.

16. Landmaschine zum Schneiden von Pflanzengut nach Anspruch 15, ***dadurch gekennzeichnet,*** daß ein Warnschild (50), das direkt oder indirekt mit dem Schneidmechanismus (2) verbunden ist, mittels eines zweiten Betätigungselements (47) automatisch in eine Betriebsstellung bewegt wird, wenn der Schneidmechanismus (2) in die Transportstellung (B) gebracht wird, und in eine Außerbetriebsstellung, in der es das Schneiden des Pflanzenguts nicht behindert, bewegt wird, wenn der Schneidmechanismus (2) in Arbeitsstellung (A) bewegt wird.

17. Landmaschine zum Schneiden von Pflanzengut nach Anspruch 16, ***dadurch gekennzeichnet,*** daß ein Kopplungsmittel (32, 33, 44, 45) das zweite Betätigungselement (47) mit dem ersten Betätigungselement (35) verbindet.

18. Landmaschine zum Schneiden von Pflanzengut nach Anspruch 17 und irgend einem der Ansprüche 7 bis 10, ***dadurch gekennzeichnet,*** daß das zweite Gelenk (70) einen Zapfen (32) umfaßt, wobei an einem Ende davon der Anschlag (33) und an dem anderen Ende davon ein Arm (44) befestigt ist, und daß das zweite Betätigungselement (47) aus einer Stange besteht, die zwischen dem Arm (44) und einem das Warnschild (50) tragenden Arm (49) angelenkt ist.

19. Landmaschine zum Schneiden von Pflanzengut nach Anspruch 18, ***dadurch gekennzeichnet,*** daß die Länge der Stange (47) einstellbar ist.

20. Landmaschine zum Schneiden von Pflanzengut nach irgend einem der Ansprüche 16 bis 19, ***dadurch gekennzeichnet,*** daß das Warnschild (50) mittels eines vierten Gelenks (51) direkt oder indirekt so mit dem Schneidmechanismus (2) verbunden ist, daß es durch Schwenken um die Achse (51A) des vierten Gelenks (51) in die Betriebsstellung und in die Außerbetriebsstellung bewegt werden kann.

21. Landmaschine zum Schneiden von Pflanzengut nach Anspruch 20,
***dadurch gekennzeichnet,*** daß die Achse (51A) des vierten Gelenks (51) nach vorne gerichtet ist, wenn sich der Schneidmechanismus (2) in der Arbeitsstellung (A) befindet.

22. Landmaschine zum Schneiden von Pflanzengut nach Anspruch 20 oder 21 und irgend einem der Ansprüche 7 bis 10, ***dadurch gekennzeichnet,*** daß die Achse (51A) des vierten Gelenks (51) zumindest im wesentlichen parallel zur Achse (70A) des zweiten Gelenks (70) verläuft.

23. Landmaschine zum Schneiden von Pflanzengut nach irgend einem der Ansprüche 16 bis 22, ***dadurch gekennzeichnet,*** daß die Achse (11A) des ersten Gelenks (11) nach oben gerichtet ist und daß das Warnschild (50) an dem von der Kupplungsvorrichtung (3) entfernten äußeren Ende des Schneidmechanismus (2) vorgesehen ist.

24. Landmaschine zum Schneiden von Pflanzengut nach irgend einem der Ansprüche 1 bis 23, ***dadurch gekennzeichnet,*** daß der Schneidmechanismus (2) mit der Kupplungsvorrichtung (3) verbunden ist; diese Verbindung erfolgt mittels eines Trägers (5), der einerseits mittels eines dritten Gelenks (9) mit einer Achse (9A), die nach vorne gerichtet ist, wenn sich der Schneidmechanismus (2) in Arbeitsstellung (A) befindet, mit dem Schneidmechanismus (2) verbunden ist und andererseits mittels des ersten Gelenks (11) mit der Kupplungsvorrichtung (3) verbunden ist, wobei ein zwischen dem Schneidmechanismus (2) und dem Träger (5) wirkendes Begrenzungselement (52) das Schwenken des Schneidmechanismus (2) bezüglich des Trägers (5) um die Achse (9A) des dritten Gelenks (9) im Betrieb begrenzt und dieses Schwenken beim Transport verriegelt, wobei die Verriegelung bzw. die Entriegelung des Schwenkens mittels eines dritten Betätigungselements (59, 62, 66) automatisch erfolgt, wenn der Schneidmechanismus (2) in eine Transportstellung (B) bzw. in die Arbeitsstellung (A) bewegt wird.

25. Landmaschine zum Schneiden von Pflanzengut nach Anspruch 24 oder den Ansprüchen 24 und 16, ***dadurch gekennzeichnet,*** daß das dritte Betätigungselement (59, 62, 66) mit einem des Betätigungselements (35, 47) verbunden ist.

26. Landmaschine zum Schneiden von Pflanzengut nach Anspruch 25, ***dadurch gekennzeichnet,*** daß das dritte Betätigungselement (59, 62, 66) mit dem ersten Betätigungselement (35) verbunden ist.

27. Landmaschine zum Schneiden von Pflanzengut nach Anspruch 24, 25 oder 26, ***dadurch gekennzeichnet,*** daß das Begrenzungselement (52) einen Begrenzer (53) umfaßt, der mit einem Langloch (55) und einem Riegel (57) versehen ist, welcher mittels eines durch einen gleichzeitig die längliche Öffnung (55) des Begrenzers (53) durchquerenden Zapfen (56) gebildeten fünften Gelenks mit dem Träger (5) verbunden ist.

28. Landmaschine zum Schneiden von Pflanzengut nach Anspruch 27, ***dadurch gekennzeichnet,*** daß die Achse (56A) des fünften Gelenks zumindest im wesentlichen parallel zur Bewegungsrichtung (8A) verläuft, wenn sich der Schneidmechanismus (2) in Arbeitsstellung (A) befindet.

29. Landmaschine zum Schneiden von Pflanzengut nach Anspruch 27 oder 28,
***dadurch gekennzeichnet,*** daß das dritte Betätigungselement (59, 62, 66) zwei elastisch verformbare Elementer (62, 66) umfaßt, von denen eines (62) die Betätigung des Riegels (57) und das andere (66) dessen Außerkraftsetzung gewährleistet.

30. Landmaschine zum Schneiden von Pflanzengut nach Anspruch 29, ***dadurch gekennzeichnet,*** daß die elastisch verformbaren Elementer (62, 66) aus Zugfedern bestehen.
